Europäisches Patentamt

European Patent Office

Office européen des brevets

(11) Publication number: **0 247 877 B1**

# EUROPEAN PATENT SPECIFICATION

(45) Date of publication of patent specification: **21.04.93**    (51) Int. Cl.⁵: **C08F 255/02**, B32B 27/04, //(C08F255/02,222:04)

(21) Application number: **87304740.1**

(22) Date of filing: **28.05.87**

(54) Modified polyolefins.

(30) Priority: **28.05.86 FI 862263**

(43) Date of publication of application: **02.12.87 Bulletin 87/49**

(45) Publication of the grant of the patent: **21.04.93 Bulletin 93/16**

(84) Designated Contracting States: **AT BE CH DE ES FR GB GR IT LI NL SE**

(56) References cited: FR-A- 2 253 060 US-A- 4 451 512

(73) Proprietor: **NESTE OY Keilaniemi SF-02150 Espoo 15(FI)**

(72) Inventor: **Bergstrom, Christer Pietarinkatu 10 C 19 FI-00140 Helsinki(FI)** Inventor: **Palmgren, Tor Henrik Hallonnasgatan 4C 47 FI-00210 Helsinki(FI)**

(74) Representative: **Ablewhite, Alan James et al MARKS & CLERK 57/60 Lincoln's Inn Fields London WC2A 3LS (GB)**

Rank Xerox (UK) Business Services
(3.10/3.5x/3.0.1)

**Description**

The present invention relates to modified polyolefins which adhere well to metals and other polar substances.

Polyethylene and polyolefins on the whole are characterized by poor adhesion to metals and materials containing polar groups. Somewhat better adhesion is achieved in certain instances by copolymerizing unsaturated esters, such as vinyl acetate or alkyl (meth) acrylate (methylacrylate, ethylacrylate, butylacrylate,), but these copolymers, too, present inadequate adhesion in most multi-layer structures. Various ways have been tried to improve this adhesion. Unsaturated acid anhydrides, among others, have been used as a co-monomer in the preparation of copolymers or terpolymers of ethylene. Examples of commercial applications are ethylene/acrylic acid copolymer which contains 9% acrylic acid, and ethylene/methacrylic acid copolymer which contains 9% methacrylic acid. A known commercial terpolymer contains 4% acrylic acid and 7% butylacrylate. Also commercially available is a product in which the methacrylic acid has been partially neutralized (to salt) thus providing an "ionomer." An example of the use of maleic acid anhydride in improving adhesion involves maleic acid anhydride grafted to LDPE, HDPE or EVA. Another example is the terpolymer of ethylene, butylacrylate and maleic acid anhydride.

A further example is provided in FR-A-2253060, in which a high strength adhesive is provided comprising ethylene-vinyl acetate (EVA) copolymers mixed with between 1 and 100 parts of a chlorinated polyolefin and 0.05 and 100 parts of an unsaturated carboxylic acid.

Direct copolymerisation of ethylene with an unsaturated acid is disadvantageous for several different reasons. The acids are corrosive and reduce the service life of the apparatus both during synthesis and shaping. Moreover, these ethylene/acid copolymers or terpolymers are thermally unstable, with the consequence that low working temperatures have to be employed, restricting production rate and product quality. High acid ratios are indispensable for achieving satisfactory adhesion because the copolymerized acids are immobile and it is therefore difficult for them to project out from the polymer matrix and reach the polar groups in the boundary layer. Large quantities of acid are also required to reduce the crystallinity, this also being indispensable for adhesion. This may of course be attained by using a third monomer, such as butyl acrylate or vinyl acetate for instance. Terpolymers are, however, uneconomical in view of recovery of the co-monomers in the synthesis, and therefore the content of co-monomer which is active as regards adhesion is limited. The total co-monomer content is also limited by law in various countries for foodstuff compatibility. The crystallinity may also be lowered by admixing thermoplastic elastomer, e.g. polyisobutylene (PIB). For instance when grafting maleic acid anhydride attempts have been made to improve its mobility by using spacer groups between the maleic acid anhydride and the polymer (Diels-Alder reaction between diene and maleic acid anhydride and grafting this with the polymer).

The object of the present invention is to achieve an improvement of presently known modified ethylene polymers.

Therefore, according to the present invention, a modified polyolefin is provided having good adhesion to metals and to polar substances, characterised in that it consists of an ethylene copolymer selected from ethylene/butylacrylate (EBA), ethylene/ethylacrylate (EEA), and ethylene/methylacrylate (EMA) being admixed with or grafted to fumaric acid, said modified polyolefin having an acid content of 0.01- less than 1% by weight of said fumaric acid, based on the weight of said polyolefin.

When a polyolefin is admixed or grafted with fumaric acid in this manner, the situation is considerably more favourable when compared with those cases mentioned above. Fumaric acid is markedly less corrosive than, for example, acrylic acid, methacrylic acid or maleic acid anhydride, and when admixing or grafting fumaric acid to a polyolefin, much lower ratios are required than when copolymerising unsaturated acids. When fumaric acid is admixed or grafted to a polyolefin, the adhesion obtained is better the lower degree of crystallinity, as a lower degree of crystallinity induces lower stress in the boundary surface. Polyolefins with a low degree of crystallinity suitable for this purpose are, EBA (ethylene/butylacrylate), EEA (ethylene/ethylacrylate), and EMA (ethylene/methacrylate). It is possible to obtain sufficiently good adhesion at acid ratios of less than 1% by mixing or grafting polyolefins having a low degree of crystallinity with fumaric acid. An acid content as low as this is particularly useful when raw material costs, service life of the equipment (minimal corrosion) and manufacturing technique (the concentrate may be diluted) are taken into account. Furthermore, fumaric acid has the advantage that it is less corrosive than other commonly used acid monomers, such as acrylic acid, methacrylic acid and maleic acid anhydride, which can cause corrosion, and thereby discolouration of the product, at low concentrations. Fumaric acid is also more favourable in view of labour hygiene and foodstuff compatibility, and is easier to handle during production as it is a solid with a high boiling point. Fumaric acid also grafts far more efficiently than, for example, acrylic acid, methacrylic acid or maleic acid anhydride, which tend to boil off in connection with compounding, and which are incompletely, grafted. When admixing or grafting fumaric acid, much lower acid ratios may be used and for this reason better thermal stability is obtained, and lower co-monomer contents can be used and, in this manner, the foodstuff compatibility requirements of various applications can be met. By admixing polyolefins with a low degree of crystallinity with fumaric acid, good adhesion characteristics are obtained with or without grafting (i.e., without radical formers).

When, polyolefins are modified with fumaric acid according to the present invention, the starting material is a polyolefin, such as is described above, 0.01-20% fumaric acid and 0-0.5% radical former. These are mixed at a temperature at which the mix is molten and the radical former decomposes to form radicals to effect grafting. The mixing may be done in a batch process or continuously, and the components may be added all at one time, separately or in pairs. If the formulation contains a radical former, it is advantageous to first melt-homogenize the mix at a lower temperature and then to raise the temperature to a level at which the radical former will produce radicals. The grafting may also take place in the same way as has just been described.

When a polyolefin is admixed or grafted with fumaric acid, an ethylene copolymer which has as low as possible a degree of crystallinity. Namely EBA, EEA, and EMA is used. The degree of crystallinity may be efficiently lowered by adding a thermoplastic elastomer, for example. The radical former maybe selected from organic peroxides, peresters, percarbonates and other types of radical former. Preferably, cumylperoxide, cumyl-tertiary butylperoxide or ditertiary butylperoxide is used. In addition, the formulation may contain chain transfer agents, antioxidants or other additives typical of polyolefins.

The polyolefin admixed or grafted with fumaric acid in the way described may be used for so-called adhesion plastics in the manufacturing of multi-layer products which contain one or several polyolefin layers and one or several layers of a polar plastic (such as polyamide, EVOH), or of metal (such as aluminium, steel, copper). Such multi-layer products may be manufactured by coextrusion, by (co)extrusion coating or by (co)extrusion aluminizing, and such items as films, sheets, tubes, cables and bottles may be involved. In powder coating of steel tubes, for instance, such adhesion plastics may also be used as an adhesion layer. In "plastic alloys", which are composed of immiscible plastics (e.g. polar and non-polar) these adhesion plastics may also be used as "emulsifier polymers" to obtain adhesion between the two phases and, thereby, better technical characteristics. The adhesion to other polar materials (e.g. glass, mineral, wood) may also be improved in this way.

The invention is more closely described with the aid of the following, non-restrictive Examples. In the following Examples, Ultramid, Primacor, Nacrel Surlyn, CXA and Lupolan are all registered Trade Marks.

Example 1

In a Brabender extruder ($\phi$ = 19 mm, L = 20 D, and compression ratio 3 : 1) EBA (MI -4, BA 17%) was extruded together with 0.05% ditertiary butylperoxide and an unsaturated acid (fumaric acid, FA; acrylic acid, AA). The temperature in the extruder was 105°C, 200°C and 250°C and in the nozzle, 250°C. The nozzle was of the coextrusion type and for second layer was extruded PA-6 (BASF Ultramid B4) at 250°C. In the grafting extruder the speed of rotation of the screw was 41 min $^{-1}$. In this way, two-layer strips were extruded (acid-grafted polymer and PA-6), which were tested after 24 hours for adhesion. The test was performed with an Instron pull tester (Peeltest), the pulling rate being 50 mm/min. The force was measured after equilibrium had been obtained and was expressed in N/cm.

3

Table I shows how the acid content (FA,AA) affects adhesion.

## Table I

| Acid content % | | FA | Adhesion (N/cm) AA [x] |
|---|---|---|---|
| 0,075 | | 23,3 | 7,5 [x] |
| 0,15 | | 43,0 | 12,1 [x] |
| 0,3 | | 48,1 | 9,6 [y] |
| 0,5 | | 50,6 | 46,3 [x] |
| 1,0 | | 14,8 [x] | 37,3 [x] |

x    comparison

It can be seen from these results that if the buylacrylate content is as high as 17%, it is possible to manage with very low acid contents (<1%). When the acid contents are very low, fumaric acid improves the additivity more than acrylic acid. For comparison, the adhesion of non-grafted 17% EVA is 0.5 N/cm, and 0.2N/cm is obtained if non-grafted polyethylene is used.

Example 2

In this instance the testing was done as in Example 1 except that no ditertiary butylperoxide was added. Fumaric acid (0.5%) was added to 17% EBA with the use of peroxide.

## Table II

| Brand | Adhesion (N/cm) |
|---|---|
| EBA + 0.5% FA | 12,0 |
| EBA + 0.5% FA (grafted) | 50,6 |

These results reveal that fumaric acid causes adhesion with respect to polyamide also without grafting using peroxide. The level is, however, lower than when fumaric acid is grafted. This special feature of fumaric acid considerably facilitates the manufacturing of adhesion plastic. It may be produced without using peroxide which, as a byproduct, causes gels, or mixing may be applied with mixers having a very short retention time.

Example 3

In this instance, testing was done as in Example 1, with controls concerning adhesion to various materials (polyamide:6, BASF Ultramid B4; ethylene/vinylalcohol, EVAL-F; aluminium, steel). For metal coating, a nozzle was constructed through which the metal strip (20 mm x 1.0 mm) could be pushed. EBA (MI = 4, BA = 17%) was grafted with 0.15% and 0.5% fumaric acid. Table V reveals how said grafted copolymers and their basic polymers adhere to various materials.

## Table III

| Polymer | Adhesion (N/cm) | | | |
|---|---|---|---|---|
| | PA-6 | EVOH | Al | Fe |
| EBA + 0.15% FA (grafted) | 43,0 | 6,9 | 31,3 | 18,2 |
| EBA + 0.5% FA (grafted) | 50,6 | 21,8 | 34,0 | 32,7 |
| EBA | 0,5 | 3,0 | 10,5 | 9,8 |

It will be seen from these results that 17% EBA has some adhesion to aluminium and to steel, but a marked improvement is achieved by grafting fumaric acid to it. The adhesion is improved somewhat when the fumaric acid content is increased from 0.15% to 0.5%. The adhesion of EBA to ethylene/vinylalcohol (EVOH) and polyamide (PA-6) is altogether virtually non-existent, but grafting with fumaric acid effects a remarkable improvement. The adhesion to EVOH improves considerably on increasing the fumaric acid content from 0.15% to 0.5%, whereas the adhesion to PA-6 is good also at very low fumaric acid contents. The adhesion of fumaric acid-grafted EBA to EVOH is striking, since very low adhesion values are obtained with acrylic acid (EBA grafted with 0.7% acrylic acid yields 6.2 N/cm).

Example 4

In this instance the testing was done as in Example 3, except that comparisons were made with commercial adhesion plastics.

It can be seen in Table IV how EBA grafted with fumaric acid adhere to various materials, compared with commercial adhesion plastics.

## Table IV

| Polymer | Adhesion (N/cm) | | | |
|---|---|---|---|---|
| | PA-6 | EVOH | Al | Fe |
| EBA + 0.15% FA (grafted) | 43,0 | 6,9 | 31,3 | 18,2 |
| EBA + 0.5% FA (grafted) | 50,6 | 21,8 | 34,0 | 32,7 |
| Primacor 1420 9% AA | 55,0 | 2,6 | 10,3 | 8,3 |
| Nucrel 0903 9% MAA | 23,3 | 1,3 | 7,0 | 3,4 |
| Surlyn 1650 12% MAA + Zn | 71,3 | 0 | 5,5 | 8,1 |
| CXA 3095 | 7,0 | 3,4 | 7,1 | 9,5 |
| Lupolon A 2910 M 4% AA + 7% BA | 36,6 | 3,4 | 6,4 | 7,5 |

These results show that EBA grafted with fumaric acid, compared with competing materials, demonstrate equally good or better adhesion to polyamide, ethylene/vinylacohol, aluminium and steel.

## Claims

1. Modified polyolefin having good adhesion to metals and to polar substances, characterised in that it consists of an ethylene copolymer selected from ethylene/butylacrylate (EBA), ethylene/ethylacrylate (EEA), and ethylene/methylacrylate (EMA) being admixed with or grafted to fumaric acid, said modified polyolefin having an acid content of 0.01- less than 1% by weight of said fumaric acid, based on the weight of said polyolefin.

2. A multi-layer product, characterised in that it comprises at least one layer which has been manufactured from a modified polyolefin according to Claim 1 and of one or more layers selected from metal, polar substances, polar plastic and unmodified polyolefins.

3. A multi-layer product according to Claim 2, characterised in that it is a multi-layer film, a multi-layer tube or a multi-layer bottle.

4. A multi-layer product according to Claim 2 or 3 characterised in that the metal layers are steel, aluminium or copper and the polar plastics layers are polyamide, polyester or ethylene-vinylalcohol.

5. A process for the preparation of a modified polyolefin according to Claim 1 comprising mixing the polyolefin with fumaric acid at elevated temperature.

6. A process according to Claim 5 wherein a radical former is used for grafting the fumaric acid to the polyolefin.

**Patentansprüche**

1.  Modifiziertes Polyolefin mit guter Haftung auf Metallen und polaren Substanzen, dadurch gekennzeichnet, daß es aus einem Ethylen-Copolymer ausgewählt aus Ethylen-Butylacrylat (EBA), Ethylen-Ethylacrylat (EEA) und Ethylen-Methylacrylat (EMA) mit zugemischter oder aufgepfropfter Fumarsäure besteht, wobei jenes modifizierte Polyolefin einen Säuregehalt von 0,01 bis weniger als 1 Gew.% jener Fumarsäure bezüglich des Gewichts jenes Polyolefins aufweist.

2.  Mehrschichtprodukt, dadurch gekennzeichnet, daß es mindestens eine aus einem modifizierten Polyolefin nach Anspruch 1 hergestellte Schicht und eine oder mehrere Schichten ausgewählt aus Metallen, polaren Substanzen, polaren Kunststoffen und nicht modifizierten Polyolefinen enthält.

3.  Mehrschichtprodukt nach Anspruch 2, dadurch gekennzeichnet, daß es sich hierbei um eine Mehrschichtfolie, ein Mehrschichtrohr oder eine Mehrschichtflasche handelt.

4.  Mehrschichtprodukt nach Anspruch 2 oder 3, dadurch gekennzeichnet, daß es sich bei den Schichten aus Metall um Stahl, Aluminium oder Kupfer und bei den Schichten aus polarem Kunststoff um Polyamid, Polyester oder Ethylen-Vinylalkohol handelt.

5.  Verfahren zur Herstellung eines modifizierten Polyolefins nach Anspruch 1, dadurch gekennzeichnet, daß man das Polyolefin mit Fumarsäure bei erhöhter Temperatur mischt.

6.  Verfahren nach Anspruch 5, dadurch gekennzeichnet, daß man zum Aufpfropfen der Fumarsäure auf das Polyolefin einen Radikalbildner verwendet.

**Revendications**

1.  Polyoléfine modifiée présentant une bonne adhérence sur les métaux et sur les substances polaires, caractérisée en ce qu'elle consiste en un copolymère éthylène choisi parmi l'éthylène/butylacrylate (EBA), l'éthylène/éthylacrylate (EEA), et l'éthylène/méthylacrylate (EMA) mélangé à ou greffé sur l'acide fumarique, la polyoléfine ayant une teneur acide de 0,01-moins de 1 % en poids de l'acide fumarique, rapporté au poids de la polyoléfine.

2.  Produit multicouche caractérisé en ce qu'il comprend au moins une couche qui a été préparée à partir d'une polyoléfine modifiée selon la revendication 1 et d'une ou de plusieurs couches choisies parmi le métal, les substances polaires, le plastique polaire et les polyoléfines non modifiées.

3.  Produit multicouche selon la revendication 2, caractérisé en ce qu'il consiste en une pellicule multicouche, un tube multicouche ou un flacon multicouche.

4.  Produit multicouche selon la revendication 2 ou 3, caractérisé en ce que les couches métalliques sont constituées par de l'acier, de l'aluminium ou du cuivre et les couches de plastique polaires sont le polyamide, le polyester ou l'éthylène-alcool vinylique.

5.  Procédé pour la préparation d'une polyoléfine modifiée selon la revendication 1, comprenant le mélange de la polyoléfine avec de l'acide fumarique à une température élevée.

6.  Procédé selon la revendication 5, dans lequel on utilise un agent de formation radicalaire pour greffer l'acide fumarique sur la polyoléfine.